# EUROPÄISCHE PATENTANMELDUNG

(11) **EP 0 900 988 A1**
(43) Veröffentlichungstag der Anmeldung: **10.03.1999**
(21) Anmeldenummer: 97115571.8
(22) Anmeldetag: 06.09.1997
(51) Int. Cl.: F24D 12/02, F24D 19/10

(54) **Verfahren zur Regelung einer Heizungsanlage mit mehreren Wärmeerzeugern**

(71) Anmelder: Electrowatt Technology Innovation AG, 6301 Zug (CH)
(72) Erfinder: Marbach, Kuno, 6043 Adligenswil (CH); Illi, Bruno, 6010 Kriens (CH); Reichlin, Armin, 6415 Arth (CH)

(57) **Zusammenfassung**

Die Erfindung besteht in der Angabe eines Verfahrens zum Betrieb einer Heizungsanlage (1) mit mindestens zwei Wärmeerzeugern (2, 3, 4). Für jeden Wärmeerzeuger (2, 3, 4) wird ein optimaler Leistungsbereich definiert, der angibt, in welchem Bereich seiner Leistung der Wärmeerzeuger (2, 3, 4) optimal arbeitet. Der Betrieb der Wärmeerzeuger (2, 3, 4) wird von einem Steuer- und Regelgerät (11) derart gesteuert, dass jeder Wärmeerzeuger (2, 3, 4) möglichst innerhalb seines optimalen Leistungsbereiches betrieben wird.
Das Zuschalten eines weiteren Wärmeerzeugers (3, 4) erfolgt insbesondere bei Brennwertkesseln nicht erst dann, wenn die bereits eingeschalteten Wärmeerzeuger (2, 3) 100% ihrer Leistung erbringen. Somit kann der geforderte Wärmebedarf jederzeit gedeckt werden. Die Reaktionszeiten des Gesamtsystems auf Änderungen des Wärmebedarfs sind daher im gesamten Leistungsbereich gleich kurz.

## Beschreibung

Die Erfindung betrifft ein Verfahren zur Regelung einer Heizungsanlage mit mehreren Wärmeerzeugern der im Oberbegriff des Anspruchs 1 genannten Art.

Heizungsanlagen umfassen einen Erzeugerkreis und einen Verbraucherkreis. Die im Verbraucherkreis benötigte Leistung unterliegt grossen Schwankungen. Um einen grossen Lastbereich möglichst ökonomisch, ökologisch, und selbst bei Störung eines Wärmeerzeugers sicher abdecken zu können, werden bekanntlich mehrere Wärmeerzeuger in einer Kaskade zusammengeschaltet. Die Zusammenschaltung erfolgt gemäss einer Erzeugerfolgestrategie. Eine bekannte Strategie besteht darin, dass bei zunehmendem Wärmebedarf immer dann ein neuer Wärmeerzeuger zugeschaltet wird, wenn die im Vorlauf des Erzeugerkreises geforderte Temperatur während einer vorbestimmten Zeit nicht erreicht wird. Die Freigabe eines zusätzlichen Wärmeerzeugers erfolgt also immer erst dann, wenn die bereits eingeschalteten Wärmeerzeuger mit Volllast laufen und die geforderte Vorlauftemperatur nicht erreicht wird. Dies hat den Nachteil, dass ein geforderter Wärmebedarf solange nicht gedeckt wird, wie die Zuschaltkriterien die Freigabe eines zusätzlichen Wärmeerzeugers verzögern. Bei sinkendem Wärmebedarf werden andererseits möglichst viele Wärmeerzeuger abgeschaltet. Dabei kann nicht sichergestellt werden, dass die verbliebenen Wärmeerzeuger im optimalen Betriebsbereich arbeiten.

Der Erfindung liegt die Aufgabe zugrunde, Verfahren zur Regelung einer Heizungsanlage mit mehreren Wärmeerzeugern anzugehen, bei dem die genannten Nachteile behoben sind.

Die Erfindung besteht in den im Anspruch 1 angegebenen Merkmalen. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: eine Heizungsanlage mit mehreren Wärmeerzeugern und
- Fig. 2, 3: Schaltdiagramme für den Betrieb der Wärmeerzeuger.

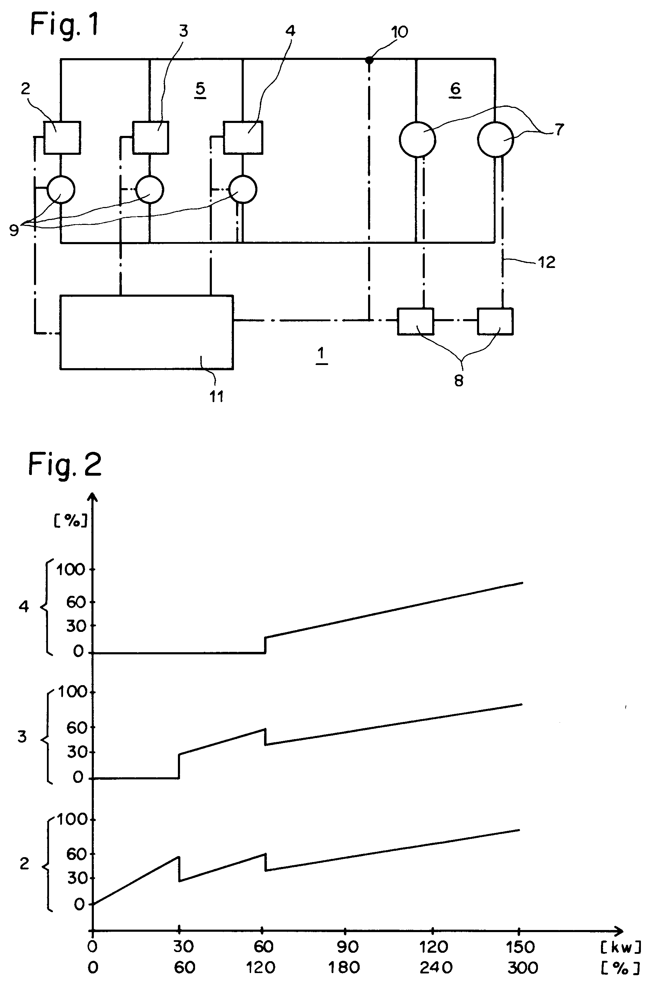

Die Fig. 1 zeigt eine Heizungsanlage 1 mit drei Wärmeerzeugern 2, 3 und 4, die in paralleler Anordnung in einem Erzeugerkreis 5 angeordnet sind. Der Erzeugerkreis 5 ist mit einem Verbraucherkreis 6 mit mehreren Verbrauchern 7 verbunden. Die Verbraucher 7 sind beispielsweise Heizkreise, Warmwasserspeicher, Wärmetauscher, usw., die von Verbraucherreglern 8 geregelt sind. Jedem der Wärmeerzeuger 2, 3 und 4 ist eine eigene Umwälzpumpe 9 zugeordnet. Es kann aber auch nur eine einzige, im gemeinsamen Vorlauf- oder Rücklauf des Erzeugerkreises 5 angeordnete Umwälzpumpe vorgesehen sein. Zur Messung der Ist-Temperatur im Vorlauf des Verbraucherkreises 6 ist ein Temperaturfühler 10 vorhanden. Die Wärmeerzeuger 2 - 4 und die Umwälzpumpen 9 werden von einem Steuer- und Regelgerät 11 gesteuert. Das Steuer- und Regelgerät 11, die Wärmeerzeuger 2, 3 und 4, die Umwälzpumpen 9, der Temperaturfühler 10, die Verbraucherregler 8 und weitere Komponenten der Verbraucher wie z.B. Ventile sind über einen bidirektionalen Bus 12 miteinander verbunden.

Das Steuer- und Regelgerät 11 ist in Verbindung mit den Verbraucherreglern 8, die angeben, welche Soll-Temperatur der Vorlauf aufweisen soll. Aus den von den Verbraucherreglern geforderten Soll-Temperaturen bestimmt das Steuer- und Regelgerät 11 die höchste und steuert die Wärmeerzeuger 2, 3 und 4 derart an, dass die Differenz zwischen der höchsten Soll-Temperatur und der gemessenen Ist-Temperatur verschwindet. Dazu gibt es jedem der Wärmeerzeuger 2, 3 und 4 vor, welche Heizleistung von ihm zu erbringen ist. Die Vorgabe erfolgt z.B. in Prozent der Nennleistung oder in absoluten Leistungswerten.

Damit die Wärmeerzeuger 2, 3 und 4 optimal betrieben werden können, wird jeder der Wärmeerzeuger 2, 3 und 4 durch einen Leistungsbereich definiert, der angibt, innerhalb welcher Leistungsgrenzen der Wärmeerzeuger optimal hinsichtlich verschiedener Parameter wie z.B. Wirkungsgrad, Korrosionsgefahr, usw. arbeitet. Der optimale Leistungsbereich ist vorzugsweise definiert durch die Angabe der Nennleistung L_{N} und eines Minimal- und eines Maximalwertes Lₘᵢₙ bzw. Lₘₐₓ in Prozent der Nennleistung. Der optimale Leistungsbereich eines Brennwertkessels ist z.B. (L_{N} = 50 kW, Lₘᵢₙ = 30%, Lₘₐₓ = 60%). Das optimale Leistungsbereich eines zweistufigen Ölbrenners ist z.B. (L_{N} = 80 kW, Lₘᵢₙ = 60%, Lₘₐₓ = 100%). Der optimale Leistungsbereich eines modulierenden Gas- oder Ölbrenners ist z.B. (L_{N} = 80 kW, Lₘᵢₙ = 40%, Lₘₐₓ = 100%).

Bei einer ersten, einfachen Ausführung der Erfindung, ist das Steuer- und Regelgerät 11 eingerichtet, eine beliebige Anzahl von gleichen Wärmeerzeugern zu steuern. Es enthält demzufolge Speichermittel zur Speicherung des diesen Wärmeerzeugern zugehörigen optimalen Leistungsbereiches. Die Wärmeerzeuger 2, 3 und 4 sind beispielsweise drei gleiche Brennwertkessel mit dem optimalen Leistungsbereich (L_{N} = 50 kW, Lₘᵢₙ = 30%, Lₘₐₓ = 60%). Übersteigt nun der Wärmebedarf eine Heizleistung von 30 kW, d.h. von 60% der Leistung eines Brennwertkessels, dann erhöht das Steuer- und Regelgerät 11 die Heizleistung des ersten eingeschalteten Brennwertkessels 2 nicht mehr weiter, sondern schaltet den zweiten Brennwertkessel 3 zu. Um die Heizleistung von 30 kW zu erbringen, gibt das Steuer- und Regelgerät 11 also den beiden Brennwertkesseln 2 und 3 eine Heizleistung von je 30% der Nennleistung L_{N} von 50 kW vor. Steigt der Wärmebedarf weiter an und übersteigt eine Heizleistung von 60 kW, d.h. von 2*60% der Nennleistung L_{N} von 50 kW der beiden eingeschalteten Brennwertkessel 2 und 3, dann schaltet das Steuer- und Regelgerät 11 den dritten Brennwertkessel 4 zu und gibt jedem der Brennwertkessel 2, 3 und 4 eine Heizleistung von 40% vor. Durch diese Betriebsweise wird erreicht, dass die Brennwertkessel 2, 3 und 4 immer möglichst ökologisch und ökonomisch arbeiten. Da das Zuschalten eines weiteren Wärmeerzeugers nicht erst dann erfolgt, wenn die bereits eingeschalteten Wärmeerzeuger 100% ihrer Leistung erbringen, kann der geforderte Wärmebedarf jederzeit gedeckt werden. Die Reaktionszeiten des Gesamtsystems auf Änderungen des Wärmebedarfs sind daher im gesamten Leistungsbereich gleich kurz.

Sinkt der Wärmebedarf wieder unter 60 kW, dann schaltet das Steuer- und Regelgerät 11 den dritten Brennwertkessel 4 wieder ab. Um bei einem Wärmebedarf, der zufällig leichten Schwankungen um den Wert von etwa 60 kW unterliegt, ein ständiges Ein- und Ausschalten des dritten Wärmeerzeugers 4 zu vermeiden, erfolgt das Ausschalten des dritten Wärmeerzeugers 4 bei einer Gesamtheizleistung, die etwas unterhalb der Gesamtheizleistung liegt, bei der der dritte Wärmeerzeuger 4 zugeschaltet wird. Eine solche Schaltdifferenz ist auch für den Ein- und den Ausschaltpunkt des zweiten Wärmeerzeugers 3 vorgesehen.

Die Fig. 2 zeigt in einem Schaltdiagramm, welche Heizleistung jeder der drei Wärmeerzeuger 2, 3 und 4 in Funktion der geforderten Gesamtheizleistung erbringen muss. Das Schaltdiagramm gibt also den Betriebszustand - eingeschaltet oder ausgeschaltet - und den Leistungszustand jedes der Wärmeerzeuger (2, 3, 4) in Funktion der Gesamtleistung der Heizungsanlage (1) an. Die Gesamtheizleistung auf der Abszissenachse ist sowohl in kW als auch in Prozenten der Nennleistung L_{N} eines einzigen Brennwertkessels angegeben, die in diesem Beispiel L_{N} = 50 kW beträgt. Auf der Ordinatenachse ist für jeden der Wärmeerzeuger 2, 3 und 4 die zu erbringende Heizleistung in Prozent seiner Nennleistung von L_{N} = 50 kW aufgetragen. Der Klarheit wegen ist die notwendige Schaltdifferenz für das Zu- und Abschalten des zweiten und dritten Wärmeerzeugers 3 bzw. 4 nicht dargestellt.

Bei dem in der Fig. 2 dargestellten Beispiel werden im Leistungsbereich zwischen 30 und 60 kW, wo die beiden Wärmeerzeuger 2 und 3 in Betrieb sind, beide Wärmeerzeuger 2 und 3 mit der gleichen Leistung betrieben, d.h. parallel hochgefahren. Ebenso werden im Leistungsbereich zwischen 60 und 150 kW alle drei Wärmeerzeuger 2, 3 und 4 mit der gleichen Leistung betrieben. Wichtig ist hierbei, dass die drei Wärmeerzeuger 2, 3 und 4 miteinander die obere Grenze Lₘₐₓ von 60 % der Nennleistung überschreiten.

Möglich sind auch andere Steuerarten, beispielsweise könnte im Leistungsbereich zwischen 30 und 45 kW die Leistung des zweiten Wärmeerzeugers 3 auf 30 % konstant gehalten werden, während die Leistung des ersten Wärmeerzeugers 2 bis auf 60 % erhöht wird. Im Leistungsbereich zwischen 45 und 60 kW würde dann die Leistung des zweiten Wärmeerzeugers 3 kontinuierlich von 30 % auf 60 % erhöht. Diese Variante bietet den Vorteil, dass die Temperatur im ersten Wärmeerzeuger 2 nach dem Zuschalten des zweiten Wärmeerzeugers 3 möglichst bald wieder den Wert erreicht, den sie unmittelbar vor dem Zuschalten des zweiten Wärmeerzeugers 3 aufwies, sofern die benötigte Heizleistung überhaupt derart gross ist.

Bei einer zweiten, erweiterten Ausführung der Erfindung, ist das Steuer- und Regelgerät 11 eingerichtet, eine beliebige Anzahl von verschiedenen Wärmeerzeugern zu steuern. Das Steuer- und Regelgerät 11 führt daher eine Tabelle mit den Leistungsbändern der zu steuernden Wärmeerzeuger 2, 3 und 4. Aus den in der Tabelle gespeicherten Daten bestimmt das Steuer- und Regelgerät 11 selbsttätig, bei welcher Leistung welcher oder welche der Wärmeerzeuger 2, 3 und 4 in Betrieb sein müssen und welche Leistung sie erbringen müssen. Dies sei an einem Beispiel näher erläutert. Die folgende Tabelle gilt für den Fall, dass die Wärmeerzeuger 2 und 3 Brennwertkessel und der Wärmeerzeuger 4 ein modulierender Gasbrenner ist.

| **Nummer des Wärmeerzeugers** | **Typ des Wärmeerzeugers** | **Nennleistung L**_{**N**} | **Minimalwert L**_{**min**} | **Maximalwert L**_{**max**} |
|---|---|---|---|---|
| 1 | Brennwertkessel | 50 kW | 30% (=15 kW) | 60% (=30 kW) |
| 2 | Brennwertkessel | 50 kW | 30% (=15 kW) | 60% (=30 kW) |
| 3 | modulierender Gasbrenner | 80 kW | 40% (=32 kW) | 100% (=80 kW) |

Die Nummern der Wärmeerzeuger geben an, in welcher Reihenfolge die Wärmeerzeuger eingeschaltet werden sollen.

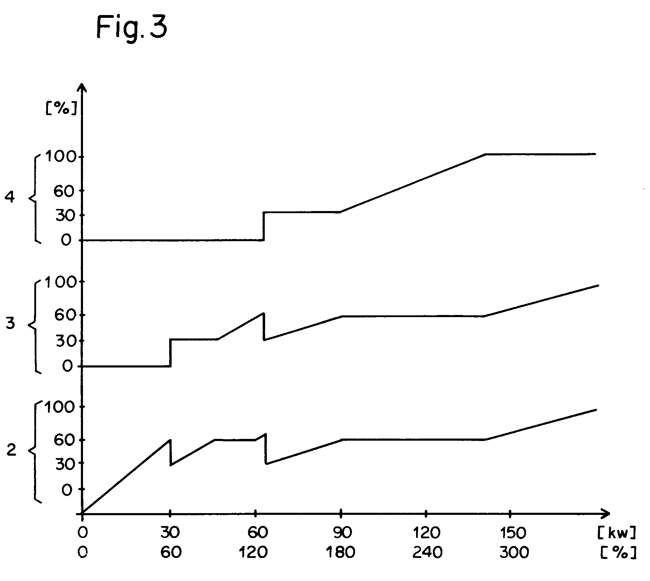

Die Fig. 3 zeigt ein mögliches Schaltdiagramm, das das Steuer- und Regelgerät 11 aus der Tabelle ableitet. Sobald der erste Wärmeerzeuger 2 seine Leistung Lₘₐₓ erreicht, wird der zweite Wärmeerzeuger 3 eingeschaltet und die Leistung beider Wärmeerzeuger 2 und 3 wird auf den Wert Lₘᵢₙ eingestellt. Es gilt ja hier, dass die addierten Leistungen Lₘᵢₙ der beiden Wärmeerzeuger 2 und 3 den Wert Lₘₐₓ des ersten Wärmeerzeuger 2 ergeben. Die Leistung des zweiten Wärmeerzeugers 3 wird nun solange auf dem Wert Lₘᵢₙ konstant gehalten, bis der erste Wärmeerzeuger 2 seine Leistung Lₘₐₓ erreicht. Anschliessend wird die Leistung des ersten Wärmeerzeugers 2 aufdem Wert Lₘₐₓ konstant gehalten, bis auch der zweite Wärmeerzeuger 3 seinen Wert Lₘₐₓ erreicht. Die Gesamtheizleistung beträgt nun 60 kW. Beide Wärmeerzeuger 2 und 3 haben nun ihren oberen Wert des optimalen Leistungsbereiches erreicht. Da die Summe der Werte Lₘᵢₙ der drei Wärmeerzeuger 2, 3 und 4 aber 62 kW und nicht 60 kW beträgt, ist nun vorgesehen, die Leistung beider Wärmeerzeuger 2 und 3 über den oberen Wert des optimalen Leistungsbereiches hinaus bis auf je 31 kW zu erhöhen und erst dann den dritten Wärmeerzeuger 4 zuzuschalten. Im Leistungsbereich von 62 kW bis 92 kW wird nun die Leistung der beiden Wärmeerzeuger 2 und 3 kontinuierlich von je 16 kW auf je 30 kW erhöht, während der dritte Wärmeerzeuger 4 mit 32 kW, d.h. seinem Wert Lₘᵢₙ betrieben wird. Im Leistungsbereich von 92 kW bis 140 kW wird die Leistung der Wärmeerzeuger 2 und 3 auf ihrem Wert Lₘₐₓ gehalten, während die Leistung des dritten Wärmeerzeugers 4 stetig bis aufden Wert Lₘₐₓ erhöht wird. Im Leistungsbereich von 140 kW bis 180 kW schliesslich wird die Leistung der Wärmeerzeuger 2 und 3 parallel von 60 % auf 100 % erhöht.

Mit diesem Schaltdiagramm wird erreicht, dass im gesamten Leistungsbereich der Heizungsanlage 1 von 0 bis 180 kW alle Wärmeerzeuger 2, 3 und 4 wo immer möglich innerhalb ihres optimalen Leistungsbereiches und somit mit optimalem Wirkungsgrad betrieben werden.

Erweiterungen des Erfindungsgedankens sind dahingehend möglich, dass anstelle eines im obigen Sinn definierten optimalen Leistungsbereiches für jeden Wärmeerzeuger dessen Wirkungsgrad in Funktion seiner Leistung parametriert wird. Das Steuer- und Regelgerät 11 ist dann eingerichtet, ein Schaltdiagramm für den Betrieb der Wärmeerzeuger derart zu erstellen, dass der Gesamtwirkungsgrad der Heizanlage möglichst gross ist.

Als Zusatzfunktion könnte das Steuer- und Regelgerät 11 auch eingerichtet sein, bei regelmässigen Laständerungen (wie z.B. beim Wechsel von der Nachtabsenkung auf Tagesbetrieb) den Wärmeerzeugern 2, 3 und 4 direkt diejenige Leistung vorzugeben, die am Vortag im gleichen Lastfall erforderlich war.

Bei einer modernen Heizungsanlage 1 ist es auch denkbar, dass die Daten über die optimale Betriebsweise der Wärmeerzeuger 2, 3 und 4 vom Hersteller derselben im Wärmeerzeuger gespeichert sind und vom Steuer- und Regelgerät 11 über den Bus 12 abgefragt werden können. Weiter erkennt das Steuer- und Regelgerät 11 vorzugsweise selbsttätig, wieviele Wärmeerzeuger vorhanden sind, beispielsweise indem es zählt, wieviele Busadressen von Wärmeerzeugern belegt sind. In diesem Fall ist das Steuer- und Regelgerät 11 auch eingerichtet, selbständig zu bestimmen, in welcher Reihenfolge die Wärmeerzeuger in Betrieb genommen werden sollen.

## Patentansprüche

1. Verfahren zum Betrieb einer Heizungsanlage (1) mit mindestens zwei Wärmeerzeugern (2, 3, 4), **dadurch gekennzeichnet, dass**
a) für jeden Wärmeerzeuger (2, 3, 4) ein optimaler Leistungsbereich definiert wird, der angibt, in welchem Bereich seiner Leistung der Wärmeerzeuger (2, 3, 4) optimal arbeitet, und dass
b) der Betrieb der Wärmeerzeuger (2, 3, 4) derart gesteuert wird, dass jeder Wärmeerzeuger (2, 3, 4) möglichst innerhalb seines optimalen Leistungsbereiches betrieben wird.

2. Verfahren nach Anspruch 1, **dadurch gekennzeichnet, dass** der optimale Leistungsbereich definiert ist durch Angabe seines Minimal- und seines Maximalwertes.

3. Verfahren nach Anspruch 1 oder 2, **dadurch gekennzeichnet, dass** das Zuschalten und Wegschalten der Wärmeerzeuger (3, 4) mit Ausnahme des ersten Wärmeerzeugers (2) bei verschiedenen Werten der Gesamtheizleistung der Heizungsanlage (1) erfolgt.

4. Verfahren zum Betrieb einer Heizungsanlage (1) mit mindestens zwei Wärmeerzeugern (2, 3, 4), **dadurch gekennzeichnet, dass** der Wirkungsgrad jedes Wärmeerzeugers (2, 3, 4) in Funktion der Leistung gespeichert wird und dass die Wärmeerzeuger (2, 3, 4) derart gesteuert werden, dass der Gesamtwirkungsgrad der Heizungsanlage (1) immer möglichst gross ist.

5. Steuer- und Regelgerät zur Durchführung des Verfahrens nach einem der vorhergehenden Ansprüche, **dadurch gekennzeichnet, dass** es eingerichtet ist, aus den den optimalen Leistungsbereich der Wärmeerzeuger (2, 3, 4) definierenden Daten ein Schaltdiagramm abzuleiten, das den Betriebszustand und den Leistungszustand jedes der Wärmeerzeuger (2, 3, 4) in Funktion der Gesamtheizleistung der Heizungsanlage (1) angibt.
